# EUROPÄISCHE PATENTANMELDUNG

(11) **EP 2 233 355 A1**
(43) Veröffentlichungstag der Anmeldung: **29.09.2010**
(21) Anmeldenummer: 10450046.7
(22) Anmeldetag: 22.03.2010
(51) Int. Cl.: B60Q 1/00, F21V 19/00

(54) **Scheinwerfer**

(30) Priorität: 24.03.2009 AT 4722009
(71) Anmelder: Hella Fahrzeugteile Austria GmbH, 7503 Grosspetersdorf (AT)
(72) Erfinder: Dragov, Nikola, Dipl.-Ing., 1230 Wien (AT)
(74) Vertreter: Patentanwälte Barger, Piso & Partner

(57) **Zusammenfassung**

Die Erfindung betrifft einen Scheinwerfer (1) mit zumindest mit einem Gehäuse (2), einem im Gehäuse angeordneten Reflektor (5) und mit einem Abdeckglas (6), wobei im Gehäuse, gegebenenfalls am Reflektor befestigt, eine Fassung (3) für eine Lichtquelle (7) vorgesehen ist und eine Stromzuleitung von einem außerhalb des Gehäuses vorgesehenen Steckers (4) zur Fassung (3) führt.

Der Scheinwerfer ist **dadurch gekennzeichnet, dass** der Stecker (4) einstückig mit dem Gehäuse (2) ausgebildet ist, dass die elektrischen Kontakte (14) im Bereich der Steckerausbildung (4) nach Art verlorener Kerne im Gehäusematerial eingebettet sind, und dass die Verbindung zwischen diesen metallischen Kontakten (14) und der Fassung durch Leiterbahnen (15) erfolgt, die auf der inneren Oberfläche des Gehäuses (2) angeordnet sind.

## Beschreibung

Die Erfindung betrifft einen Scheinwerfer entsprechend dem Oberbegriff des Anspruches 1 und entsprechend der DE 101 46 475 A.

Diese Druckschrift offenbart die Verwendung von im Gehäuse des Scheinwerfers vorgesehene elektrische Leiter, die die Fassung des Leuchtmittels elektrisch kontaktieren. Damit werden die mechanischen Probleme der Verdrahtung vermieden. Eine ähnliche Anordnung ist auch aus der DE 42 15 749 C bekannt. Bei beiden Druckschriften werden keine besonderen Vorkehrungen dafür angegeben, wie die Leiterbahnen mit der Versorgungsleitung verbunden werden.

Eine derartige Verbindung mittels eines Steckers ist aus der US 6,254,436 B bekannt, die ansonsten einen konventionellen Scheinwerfer mit diskreter Verdrahtung offenbart. Bei diesem Stecker sind die Kontakte nach Art verlorener Kerne im Gehäuse eingegossen.

In vielen praktischen Fällen ist der Stecker ins Gehäuse integriert, sodass, beispielsweise bei der Verwendung in Kraftfahrzeugen, nur ein passender Gegenstecker des Kabelbaums auf den Stecker aufgesteckt werden muss, was wegen dessen Fixierung am Gehäuse sowohl geometrisch als auch von der notwendigen Kraft her, keine Probleme mit sich bringt.

Als Stand der Technik sei noch auf die US 7,476,014 B verwiesen, die ein spezielles Gehäuse für einen Scheinwerfer eines Kraftfahrzeuges offenbart, wobei wesentliche Teile des Gehäuses wahlweise mit einer Halogenlampe, oder einer Hochleistungs-Entladungslampe verwendet werden können. Dabei ist in der ersten Konfiguration der Sockel der Halogenlampe direkt im Reflektor eingesetzt und ragt durch eine sehr große Öffnung im Gehäuse nach außen, wo er einstückig den Stecker ausbildet. Es weist in dieser Konfiguration der Scheinwerfer kein Gehäuse im eigentlichen Sinne auf, da der Reflektor auch die Eigenschaften und Aufgaben des Gehäuses übernimmt. Das "Restgehäuse" dient nur der Montage am Fahrzeug. In der zweiten Konfiguration ist nun tatsächlich das Gehäuse, wenn auch mehrteilig ausgebildet(!), geschlossen. Vom Sockel für die Lampe führt ein erster Kabelstrang zur Schaltungselektronik für die Entladungslampe, von dieser Elektronik wiederum führt eine zweiter Kabelstrang, an dessen Ende ein Steckerelement vorgesehen ist, zu einer passenden Stelle im Gehäuse, an der von außen der Gegenstecker des Kabelbaums eingesteckt werden kann.

Diese erst vor wenigen Wochen veröffentlichte Druckschrift zeigt die der Erfindung zugrunde liegende Problematik in ihrer ganzen Schärfe, da bei diesem Scheinwerfer der Reflektor de facto als Gehäuse, zumindest was die Dichtigkeit anlangt, verwendet wird und das eigentliche Gehäuse in seiner Funktionalität auf die Möglichkeit zur Befestigung im Fahrzeug und einem gewissen mechanischen Schutz für Fassung bzw. Schaltungselektronik beschränkt wird. Dass dies im Hinblick auf die oben genannten Verschmutzungs- und Korrosionsprobleme völlig unbefriedigend ist, ist unmittelbar einsichtig.

Die Erfindung hat das Ziel, all diese Nachteile zu vermeiden und einen Scheinwerfer mit einer Stromzuleitung anzugeben, die diese Nachteile nicht aufweist und dabei doch kostengünstig und ohne, oder zumindest ohne merklichen Mehraufwand erreicht werden kann.

Erfindungsgemäß werden diese Ziele durch die im kennzeichnenden Teil des Anspruches 1 angegebenen Merkmale erreicht.

Dies bedeutet mit anderen Worten, dass der Stecker einstückig aus dem Gehäusematerial ausgebildet ist, dass die Lampenfassung einstückig aus dem Gehäusematerial ausgebildet ist, dass die elektrischen Leiter im Bereich der Steckerausbildung bzw. der Fassungsausbildung nach Art verlorener Kerne im Gehäusematerial eingebracht sind, und dass die Verbindung zwischen diesen metallischen Kontaktelementen durch Leiterbahnen erfolgt, die auf der inneren Gehäuseoberfläche angeordnet sind. Dabei ist in einer ersten Variante vorgesehen, dass diese Leiterbahnen entweder aus ausgestanzten und passend gebogenen Blechteilen bestehen, oder dass sie durch Aufschmelzen oder auch Aufdampfen von Metall aufgebracht werden, wobei jeweils auch die Kontaktierung mit den Kontaktelementen erfolgt, und in einer zweiten Variante, dass auch die Leiterbahnen und die metallischen Kontaktelemente einstückig ausgebildet sind, was mechanisch besonders günstig ist.

Auf diese erfindungsgemäße Weise wird die Verwendung jeglichen Kabels vermieden, die Durchtritte erfolgen durch die praktisch vollkommen vom Gehäusematerial umschlossenen Kontaktelemente, die nur an den Stellen blank zu Tage treten, an denen es ihre Funktionalität im Stecker bzw. in der Fassung notwendig macht und die Tatsache, dass die Leiterbahnen gegebenenfalls im Inneren des Gehäuses frei liegen, stellt keine Gefährdung dar, da es sich ja dabei um die innere Oberfläche des Gehäuses handelt. Auch ist es möglich, die Leiterbahnen wenn es gewünscht wird, mit Kunststoffmaterial passend abzudecken.

Die Erfindung wird im Folgenden anhand der Zeichnung kurz dargestellt. Dabei zeigt bzw. zeigen
die Fig. 1 einen Scheinwerfer entsprechend dem Stand der Technik in einem rein schematischen Schnitt und
die Fig. 2 einen erfindungsgemäßen Scheinwerfer in perspektivischer Ansicht, teilweise aufgebrochen.

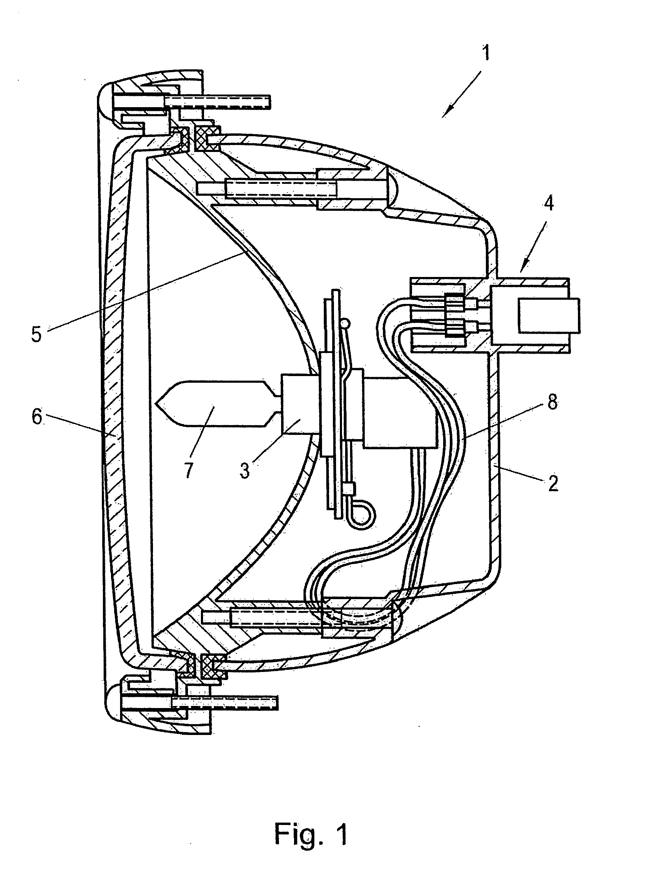

Aus Fig. 1 ist ein Scheinwerfer 1 gemäß dem Stand der Technik ersichtlich. Er weist ein Gehäuse 2 auf, das an seiner Vorderseite mit einer Lichtscheibe 6 verschlossen ist. Im Inneren befindet sich ein Reflektor 5, der eine Fassung 3 für eine Lichtquelle, beispielsweise eine Birne 7 trägt. Im hinteren Teil des Gehäuses 2 ist, auch im Stand der Technik, schon ein Stecker 4 ausgebildet, der an seiner Innenseite mittels eines Kabels 8 mit der Fassung verbunden ist. Um die Lampe zu wechseln ist es notwendig, das Gehäuse 2 von der Lichtscheibe 6 oder einem damit verbundenen Tragrahmen oder dergleichen zu trennen, um an die speziell ausgebildete Fassung 3 zu gelangen, die auf eine im Automobilbau seit Jahrzehnten übliche und bekannte Weise von Außen vom Reflektor 5 abgenommen werden kann, um die Birne 7 wechseln zu können. Das Kabel 8 muss nun, wie durch seine Lage angedeutet, so lange sein, dass der Zugang zur Fassung möglichst leicht erfolgen kann und läuft dabei, wie durch seine Lage angedeutet, in Gefahr, beim Wiederverschließen des Gehäuses eingeklemmt und beschädigt zu werden. Auf seinem dem Stecker zugewandten Ende trägt das Kabel die Kontaktstifte, die von Innen passend in die Steckerausbildung des Gehäuses gesteckt werden, ohne dass eine spezielle Abdichtung möglich ist.

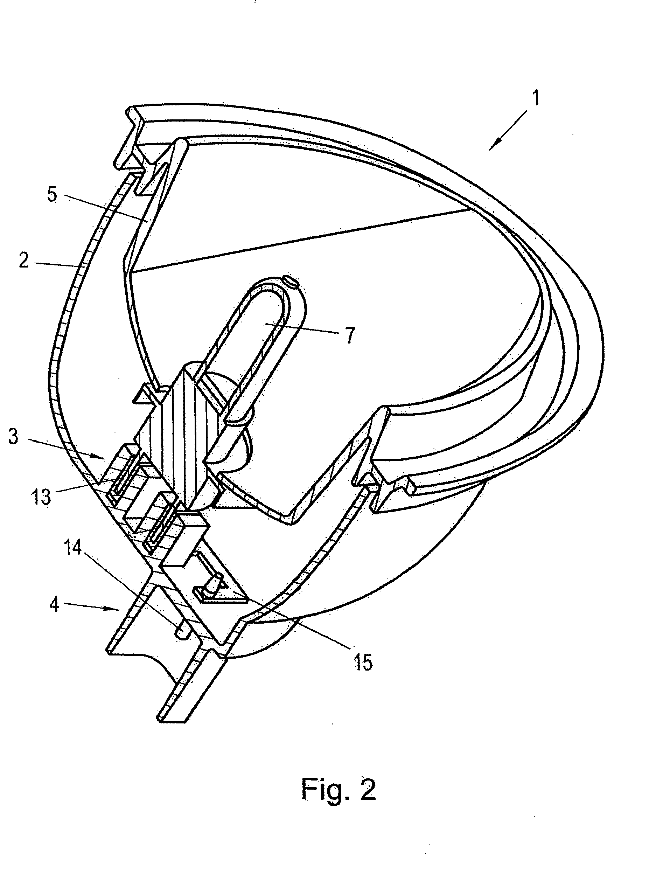

Die Fig. 2 zeigt eine erfindungsgemäße Lösung, wobei für gleiche bzw. einander entsprechende Bestand- bzw. Bauteile gleiche Bezugszeichen wie in Fig. 1 verwendet werden. Ein erfindungsgemäßer Scheinwerfer 1 weist, einstückig mit dem Gehäuse 2 ausgebildet, einen Steckerbereich 4 und einen Sockelbereich 3 auf. Letzterer ragt durch eine Öffnung im Reflektor 5 und trägt eine Birne 4. Die Lichtscheibe ist in Fig. 2 nicht dargestellt, ihr Montagering ist aber gut ersichtlicht und sie stört nicht beim Wechseln der Birne 4, wenn das Gehäuse 2 vom Reflektor bzw. dessen äußerem Ring nach hinten abgezogen wird.

Im Steckerbereich 4 und im Fassungsbereich 3 sind, wie oben erläutert, metallische Kontakte 13, 14, beispielsweise nach Art verlorener Kerne, eingegossen bzw. eingespritzt, jedenfalls so gut wie vollständig vom Material des Gehäuses 2 umgeben, ausgenommen nur die Bereiche, in denen es für ihre Funktion notwendig ist, kontaktierbar zu sein. Die Verbindung zwischen diesen Kontakten 14 einerseits und 13 andererseits erfolgt über Leiterbahnen 15, dabei können auch elektronische Bauteile in diesem Bereich für die unterschiedlichsten Zwecke vorgesehen sein, und es kann auf jedwedes Kabel verzichtet werden.

Die Leiterbahnen 15 können entweder aus ausgestanztem Blech bestehen, auf das die Kontakte bei der Fertigung des Scheinwerfers bereits aufgelötet (oder geklebt, etc.) sind, sodass die mechanische Handhabung vereinfacht wird, oder es werden die Leiterbahnen auf das ansonsten fertige, die Kontakte bereits aufweisende Gehäuse aufgedampft oder aufgeschmolzen, wodurch wiederum die elektrischen Verbindungen in einem mit hergestellt werden. Diese Verfahren sind, ebenso wie die dafür benötigten Materialien und Vorrichtungen bekannt und bedürfen hier keiner weiteren Erläuterung.

Auch bei der genannten einstückigen (pro Pol, natürlich) Ausführung ergeben sich für den Fachmann in Kenntnis der Erfindung keine Schwierigkeiten bei der Durchführung oder der Auswahl des Materials.

Es kann die Fassung im Reflektor vorgesehen sein und durch die passende Wahl der Abmessungen und Formen von Gehäuse und Reflektor relativ zueinander eine federnde Kontaktierung geschaffen werden; es kann die Fassung im Gehäuse vorgesehen sein und federnd gegen den Reflektor gedrückt werden; es kann aber bei ausreichender Genauigkeit der Herstellung auch die Fassung einfach am Gehäuse ausgebildet und positioniert sein, das ist für den Fachmann sowohl bei der Auswahl der Möglichkeiten als auch bei der Ausbildung des Scheinwerfers in Kenntnis der Erfindung kein Problem.

Es kann selbstverständlich im Gehäuse im Zuge der Leiterbahnen eine elektronische Schaltung vorgesehen sein, entweder auf einereigenen Platine od.dergl. eingesetzt oder direkt am Gehäuse ausgebildet.

## Patentansprüche

1. Scheinwerfer (1) mit zumindest mit einem Gehäuse (2), einem im Gehäuse angeordneten Reflektor (5) und mit einem Abdeckglas (6), wobei im Gehäuse, gegebenenfalls am Reflektor befestigt, eine Fassung (3) für eine Lichtquelle (7) vorgesehen ist und eine Stromzuleitung von einem außerhalb des Gehäuses vorgesehenen Steckers (4) zur Fassung (3) führt, **dadurch gekennzeichnet, dass** der Stecker (4) einstückig mit dem Gehäuse (2) ausgebildet ist und dass die elektrischen Kontakte (14) im Bereich der Steckerausbildung (4) nach Art verlorener Kerne im Gehäusematerial eingebettet sind, dass die Fassung (3) einstückig mit dem Gehäuse (2) ausgebildet ist und dass die metallischen Kontakte (13) der Fassung (3) nach Art verlorener Kerne im Gehäusematerial eingebettet sind, und entweder, dass die elektrische Verbindung zwischen den metallischen Kontakten (14) und den metallischen Kontakten (13) der Fassung durch Leiterbahnen (15) erfolgt, die auf der inneren Oberfläche des Gehäuses (2) angeordnet und einstückig mit den metallischen Kontakten ausgebildet sind, oder, dass die elektrische Verbindung als Leiterbahnen (15) auf die innere Oberfläche des Gehäuses (2) mit den bereits vorhandenen metallischen Kontakten (13 bzw. 14) aufgedampft bzw. aufgeschmolzen werden.

2. Scheinwerfer nach Anspruch 1, **dadurch gekennzeichnet, dass** die Fassung (3) vom federnd ausgebildeten Gehäuse (2) gegen den steif ausgebildeten Reflektor (5) gedrückt und so positioniert wird.

3. Scheinwerfer nach Anspruch 1, **dadurch gekennzeichnet, dass** die Fassung (3) im Reflektor (5) montiert oder einstückig mit ihm ausgebildet ist und die Kontaktierung durch federnde Ausbildung des Gehäuses im Kontaktbereich erfolgt.

4. Scheinwerfer nach einem der voranstehenden Ansprüche, **dadurch gekennzeichnet, dass** die Leiterbahnen (15) zumindest eine elektronische Schaltung tragen.
